# EUROPÄISCHE PATENTSCHRIFT

(11) **EP 0 807 545 B1**
(45) Veröffentlichungstag und Bekanntmachung des Hinweises auf die Patenterteilung: **07.06.2000**
(21) Anmeldenummer: 97104996.0
(22) Anmeldetag: 25.03.1997
(51) Int. Cl.: B60J 7/057, G05B 19/35

(54) **Vorrichtung zum Betätigen eines in einem Fahrzeug angeordneten Verstellantriebs**
Actuating device for an operating mechanism in motor vehicle
Commande pour dispositif d'actionnement pour véhicule

(30) Priorität: 18.05.1996 DE 19620106
(43) Veröffentlichungstag der Anmeldung: 19.11.1997
(73) Patentinhaber: ROBERT BOSCH GMBH, 70442 Stuttgart (DE)
(72) Erfinder: Voehringer, Klaus, 76316 Malsch (DE); Dreier, Friedrich-Wilhelm, 76547 Sinzheim (DE); Haderer, Guenter, 77815 Buehl (DE)

(56) Entgegenhaltungen:
- EP-A- 0 480 522
- DE-A- 3 324 107
- DE-A- 3 829 405

## Beschreibung

### Stand der Technik

Die Erfindung geht aus von einer Vorrichtung zum Betätigen eines in einem Fahrzeug angeordneten Verstellantriebs. Aus der gattungsbildenden DE-A 33 24 107 ist eine Betätigungseinrichtung für Verschiebe-Hebdächer in Kraftfahrzeugen bekannt, die eine Beschreibung eines Potentiometers beinhaltet, welches zur Sollwertvorgabe eingesetzt wird. Dabei ist es zweckmäßig, bereichsabhängig unterschiedliche Steilheiten der Kennlinie des Potentiometers vorzugeben, um so eine flexible Anpassung an unterschiedliche Belastungsfälle zu erreichen. Insbesondere bei Schiebedächern ist eine Unterscheidung zwischen Hebe- und Schiebestellung von Bedeutung. Damit sind zwei Stellbereiche des Potentiometers realisiert, in denen mit unterschiedlicher Genauigkeit ein Sollwert vorgegeben werden kann. Es werden damit nur analoge Sollwerte an die Regeleinrichtung weitergeleitet. Schalt- bzw. Tastfunktionen können über das Potentiometer nicht ausgeführt werden.

### Vorteile der Erfindung

Der erfindungsgemäßen Vorrichtung zum Betätigen eines in einem Fahrzeug angeordneten Verstellantriebs liegt die Aufgabe zugrunde, analoge Sollwertvorgabe und Tastfunktion zu integrieren. Diese Aufgabe wird erfindungsgemäß durch die Merkmale des Anspruchs 1 gelöst. Dabei sind den zumindest zwei Stellbereichen des Potentiometers unterschiedliche Funktionen zugeordnet. Im ersten Stellbereich des Potentiometers ist die hinlänglich bekannte analoge Sollwertvorgabe realisiert. Einem zweiten Stellbereich ist eine Schaltfunktion zugeordnet, wodurch ein Taster oder Schalter ersetzt werden kann. Insbesondere bei Schiebedächern ist diese Doppelfunktionalität besonders zweckmäßig, da durch Vorwahl im ersten Stellbereich eine bestimmte Schiebedachposition unter Berücksichtigung der Schließkraftbegrenzung anzufahren ist, während in dem zweiten Stellbereich das Schiebedach ohne Berücksichtigung einer Schließkraftbegrenzung im Tippbetrieb verstellt werden kann. Das Potentiometer der erfindungsgemäßen Vorrichtung läßt sich durch ein Bedienelement manuell betätigen. Dieses Potentiometer benötigt drei Zuleitungen. Wollte man Schalt- und Potentiometerfunktion getrennt realisieren, wären zumindest vier Leitungen nötig. Durch die erfindungsgemäße Vorrichtung reduziert sich der Verkabelungsaufwand und der Platzbedarf für eine entsprechende Armatur. Eine zweckmäßige Ausgestaltung der erfindungsgemäßen Vorrichtung sieht vor, daß die zumindest zwei Stellbereiche dadurch voneinander unterschieden werden können, daß die Potentiometerspannung mit einer für die Stellbereichsgrenze charakteristischen Referenzspannung verglichen wird. Unter- oder überschreitet die Potentiometerspannung diese Referenzspannung, wird dies von einer Steuerelektronik erkannt und der Verstellantrieb wie im Tippbetrieb angesteuert. Daran könnte beispielsweise eine Deaktivierung der Schließkraftbegrenzung gekoppelt sein. In einer weiteren Ausgestaltung der Erfindung umfaßt der erste Stellbereich den gesamten Stellbereich, wo hingegen der zweite Stellbereich durch zumindest einen Endanschlag gebildet ist. Dadurch läßt sich im ersten Stellbereich eine genaue Sollwertvorgabe erzielen. Für das Auslösen einer Schaltfunktion ist damit nur ein geringer Bereich vonnöten, was der Übersichtlichkeit der Bedienung zugute kommt. In einer zweckmäßigen Ausführungsform der erfindungsgemäßen Vorrichtung erfolgt eine Vorwahl eines zweiten Stellbereichs gegen Überwindung einer Federkraft. Damit läßt sich mit einfacher Bauform eine Tastfunktion realisieren. Insbesondere bei der Verwendung in Kraftfahrzeugen ist damit sichergestellt, daß durch Rüttelbewegungen nicht eine Schaltfunktion ausgelöst wird. Bei der Bedienung von Schiebedächern wird in der Regel der erste Stellbereich angewählt sein, was der Normalbetriebsart entspricht. Nur in Ausnahmefällen soll der Verstellantrieb des Schiebedachs im Tippbetrieb betätigt werden. Die Verwendung einer Feder reduziert Fehlauslösungen. In weiteren zweckmäßigen Ausgestaltungen ist das Bedienelement entweder als Drehknopf oder als Schiebehebel ausgeführt. Besondere Verwendung findet die erfindungsgemäße Vorrichtung zum Betätigen eines in einem Kraftfahrzeug angeordneten elektrischen Verstellantriebs für Fensterheber und Schiebedächer. Insbesondere bei Kraftfahrzeugen ist es von Bedeutung, wenn mehrere Funktionen in einem Bedienelement integriert werden können, um so den Bedienkomfort zu erhöhen und eine Platzersparnis zu erreichen. Weitere vorteilhafte Ausgestaltungen ergeben sich aus der Beschreibung.

### Zeichnung

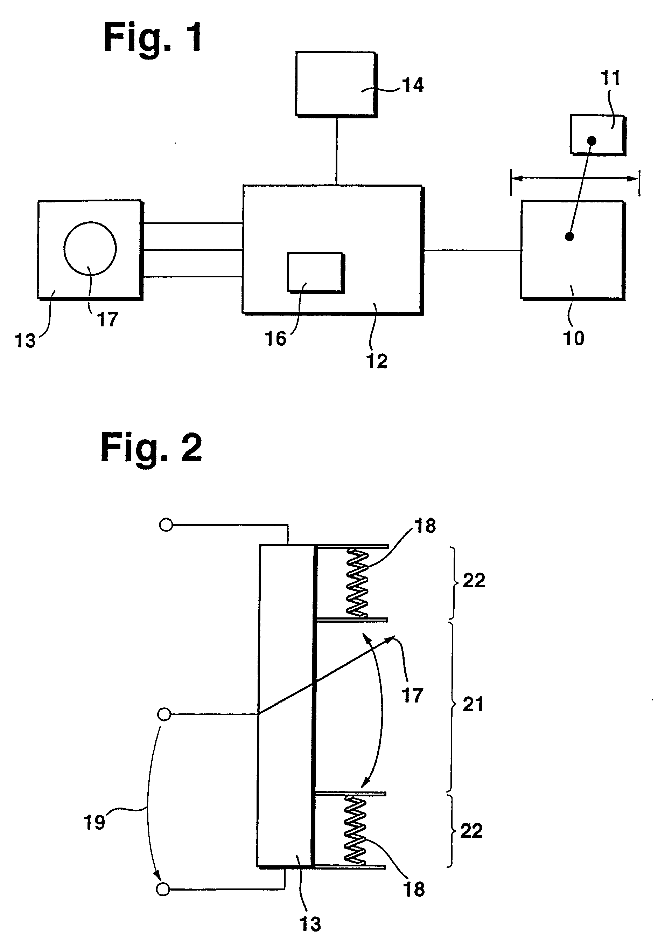

Es zeigen Figur 1 ein Ausführungsbeispiel einer erfindungsgemäßen Vorrichtung und Figur 2 eine erfindungsgemäße Ausgestaltung des Potentiometers.

### Beschreibung

Ein Verstellantrieb 10 bewegt ein Teil 11. Eine Steuerelektronik 12 beinhaltet eine Schließkraftbegrenzung 16 und verarbeitet Signale einer Positionserkennung 14 und eines über ein Bedienelement 17 betätigbaren Potentiometers 13. Gemäß der Potentiometerstellung stellt die Steuerelektronik 12 dem Verstellantrieb 10 Schaltsignale zur Verfügung. Gemäß Figur 2 umschließt ein zweiter Stellbereich 22 einen ersten Stellbereich 21. Eine Anwahl des zweiten Stellbereichs 22 über das Bedienelement 17 erfolgt gegen eine von einer Feder 18 aufgebrachten Kraft. Abhängig von der Stellung des Bedienelements 17 ändert sich eine Spannung 19 des Potentiometers 13.

Die in den Figuren 1 und 2 gezeigten Anordnungen arbeiten folgendermaßen:

Durch das Bedienelement 17 sind zumindest zwei Stellbereiche 21, 22 des Potentiometers 13 einstellbar. Im zweiten Stellbereich 22 ist eine Schaltfunktion realisiert. Ist die Anwahl des zweiten Stellbereichs 22 von der Steuerelektronik 12 erkannt, so wird der Verstellantrieb 10 beispielsweise im Tippbetrieb angesteuert. Insbesondere bei Fensterheber oder Schiebedächer ist es zweckmäßig, einen Tippbetrieb ohne Schließkraftbegrenzung 16 zu realisieren. Dadurch können für die Inbetriebnahme des Verstellantriebs 10 Normierungsläufe durchgeführt werden, um aufgrund der Meßwerte eines Normierungslaufsgrenzwerte für die Schließkraftbegrenzung 16 vorzugeben oder die Position des Verstellantriebs zu normieren. Erst dann ist eine Anwahl des ersten Stellbereichs 21 unter Berücksichtigung der Schließkraftbegrenzung 16 möglich. Spricht im Normalbetrieb die Schließkraftbegrenzung 16 an, und es stoppt daraufhin der Verstellantrieb 10, so läßt er sich bei Anwahl des zweiten Stellbereichs 22 ohne Schließkraftbegrenzung 16 bedienen. Durch die integrierte Tippfunktion im Potentiometer 13 läßt sich ein externer Taster sparen, die Bedienung wird dadurch übersichtlicher und der Verkabelungsaufwand reduziert. Über das Bedienelement 17 lassen sich im ersten Stellbereich 21 kontinuierliche oder diskrete Werte vorgeben. Die Spannung 19 ändert sich entsprechend. Dieser Spannung 19 sind Sollpositionen des Teils 11 zugeordnet. Unter Berücksichtigung der Positionsistwerte, die die Positionserkennung 14 ermittelt, wird die Soll-Ist-Differenz zu Null ausgeregelt. Hinsichtlich des ersten Stellbereichs 21 ist es denkbar, daß unterschiedliche Steilheiten der Potentiometerkennlinie durch entsprechende Beschaltung realisiert sind. Dadurch läßt sich eine Anpassung an unterschiedliche Belastungsverläufe vornehmen.

Es muß die Bereichsgrenze zwischen ersten und zweitem Stellbereich 21, 22 erkannt werden. Grundsätzlich ist dies über einen vom Bedienelement 17 betätigbaren Schalter möglich. Besonders zweckmäßig ist es jedoch, die Bereichsgrenze durch Vergleich der Spannung 19 mit einer für die Stellbereichsgrenze charakteristischen Referenzspannung zu ermitteln. Wird diese entsprechend der Ausführung des Potentiometers 13 vorgegebene Referenzspannung über- bzw. unterschritten, so erkennt die Steuerelektronik 12, daß eine Anwahl des ersten oder des zweiten Stellbereichs 21, 22 erfolgt ist. Hierbei sind nur drei Zuleitungen zu dem Potentiometer 13 erforderlich. Es wird von einer Versorgungsspannung gespeist, die Spannung 19 liefert ein Maß für die Stellung des Bedienelements 17.

Insbesondere die Endlagen bieten sich für den zweiten Stellbereich 22 an. Bei einem Drehknopf mit zwei Endlagen könnten diese dazu verwendet werden, den Verstellantrieb in die eine und in die andere Richtung zu bedienen. Um einen Richtungswechsel des Verstellantriebs 10 herbeizuführen, ohne daß eine Betriebsart, die dem ersten Stellbereich 21 zugeordnet ist, auszulösen, positioniert die Steuerelektronik 12 nur, wenn das Bedienelement 17 für ein vorgegebenes Zeitintervall in seiner Stellung verharrt. Die gleiche Problematik ergibt sich ebenfalls bei einem Schiebepotentiometer.

Eine weitere Ausgestaltung der erfindungsgemäßen Vorrichtung ist dadurch gekennzeichnet, daß eine Vorwahl des zweiten Stellbereichs 22 nur gegen Überwindung einer Kraft, die von der Feder 18 aufgebracht wird, erfolgt. Dadurch wird auf einfache Weise eine Tastfunktion realisiert. Wird das Bedienelement 17 losgelassen, so drückt die Feder 18 es wieder in den ersten Stellbereich 21. Insbesonders bei der Bedienung eines Schiebedachs stellt der erste Stellbereich 21 die Normalbetriebsart da. Nur in Ausnahmesituationen soll der erste Stellbereich 21 verlassen werden, beispielsweise wenn die Schließkraftbegrenzung 16 umgangen werden soll. Da hierbei jedoch die Sicherheit gefährdet ist, bedarf es bei der Betätigung des Bedienelements 17 gegen die Federkraft erhöhte Aufmerksamkeit. Die erfindungsgemäße Vorrichtung zum Betätigen eines in einem Fahrzeug angeordneten elektrischen Verstellantriebs findet bevorzugte Verwendung für Fensterheber oder Schiebedächer.

## Patentansprüche

1. Vorrichtung zum Betätigen eines in einem Fahrzeug angeordneten elektrischen Verstellantriebs (10),
- mit einem durch ein Bedienelement (17) manuell betätigbaren Potentiometer (13), das eine Position eines von dem Verstellantrieb (10) bewegten Teils (11) vorgibt und das zumindest in zwei Stellbereiche (21, 22) aufgeteilt ist,
- mit einer Steuerelektronik (12), die den Verstellantrieb (10) in Abhängigkeit von den Stellbereichen (21, 22) des Potentiometers (13) und den Positionsvorgaben ansteuert, dadurch gekennzeichnet, daß
- zumindest in einem ersten Stellbereich (21) des Potentiometers (13) eine Position des bewegten Teils (11) kontinuierlich oder diskret einstellbar ist und
- zumindest einem zweiten Stellbereich (22) des Potentiometers (13) eine Schaltfunktion zugeordnet ist.

2. Vorrichtung nach Anspruch 1, dadurch gekennzeichnet, daß zumindest einer der Stellbereiche (21,22) durch Vergleich mit einer Spannung (19) erkannt ist.

3. Vorrichtung nach Anspruch 1 oder 2, dadurch gekennzeichnet, daß der erste Stellbereich (21) den gesamten Stellbereich umfaßt und der zweite Stellbereich (22) durch zumindest einen Endanschlag gebildet ist.

4. Vorrichtung nach einem der Ansprüche 1 bis 3, dadurch gekennzeichnet, daß eine Vorwahl des zweiten Stellbereichs (22) gegen überwindung einer Federkraft erfolgt.

5. Vorrichtung nach einem der Ansprüche 1 bis 4, dadurch gekennzeichnet, daß das Bedienelement (17) als Drehknopf ausgeführt ist.

6. Vorrichtung nach einem der Ansprüche 1 bis 4, dadurch gekennzeichnet, daß das Bedienelement (17) als Schiebehebel ausgeführt ist.

7. Vorrichtung nach einem der Ansprüche 1 bis 6, gekennzeichnet durch Verwendung bei einem Schiebedach.

8. Vorrichtung nach einem der Ansprüche 1 bis 6, gekennzeichnet durch Verwendung bei einem Fensterheber.

## Claims

1. Device for actuating an electric actuating drive (10) arranged in a vehicle
- with a potentiometer (13) which can be actuated manually by means of an operating element, specifies a position of a part (11) moved by the actuating drive (10) and is divided into at least two actuating ranges (21, 22),
- with an electronic control device (12) which activates the actuating drive (10) as a function of the actuating ranges (21, 22) of the potentiometer (13) and the position inputs, characterized in that
- at least in a first actuating range (21) of the potentiometer (13) it is possible to set a position of the moved part (11) continuously or discretely and
- a switching function is assigned at least to a second actuating range (22) of the potentiometer (13).

2. Device according to Claim 1, characterized in that at least one of the actuating ranges (21, 22) is detected by comparison with a voltage (19).

3. Device according to Claim 1 or 2, characterized in that the first actuating range (21) covers the entire actuating range and the second actuating range (22) is formed by at least one end stop.

4. Device according to one of Claims 1 to 3, characterized in that the second actuating range (22) is preselected against a spring force to be overcome.

5. Device according to one of Claims 1 to 4, characterized in that the operating element (17) is embodied as a rotary knob.

6. Device according to one of Claims 1 to 4, characterized in that the operating element (17) is embodied as a sliding lever.

7. Device according to one of Claims 1 to 6, characterized by its use with a sliding roof.

8. Device according to one of Claims 1 to 6, characterized by its use with a window lifter.

## Revendications

1. Dispositif servant à actionner un mécanisme de réglage (10), disposé dans un véhicule, comprenant :
• un potentiomètre (13) qui peut être actionné manuellement par un élément de manoeuvre (17), et qui prédéfinit une position d'une pièce (11) qui est mue par le mécanisme de réglage (10) et qui est réparti en au moins deux zones de réglage (21, 22),
• un circuit électronique de commande (13)qui commande le mécanisme de réglage (10) en fonction des zones de réglage (21, 22) du potentiomètre (13), et des positions prédéfinies,
caractérisé en ce qui
• on peut régler au moins dans une première position de réglage (21) du potentiomètre (13) une position de la pièce mobile (11) de façon continue ou discrète et
• on peut associer au moins à une deuxième zone de réglage (22) du potentiomètre (13) une fonction de branchement.

2. Dispositif selon la revendication 1,
caractérisé en ce que
on identifie au moins l'une des zones de réglage (21, 22) en comparant avec une tension (19).

3. Dispositif selon la revendication 1, ou 2,
caractérisé en ce que
la première zone de réglage (21) comprend la totalité de la zone de réglage et la deuxième zone de réglage (22) est formée par au moins une butée terminale.

4. Dispositif selon l'une des revendications 1 à 3,
caractérisé en ce que
une présélection de la deuxième zone de réglage (22) a lieu en surmontant la force d'un ressort.

5. Dispositif selon l'une des revendications 1 à 4,
caractérisé en ce que
l'élément de manoeuvre (17) est réalisé sous la forme d'un bouton tournant.

6. Dispositif selon l'une des revendications 1 à 4,
caractérisé en ce que
l'élément de manoeuvre (17) est réalisé sous la forme d'un levier qu'on pousse.

7. Dispositif selon l'une des revendications 1 à 6,
caractérisé par
son utilisation dans le,cas d'un toit coulissant.

8. Dispositif selon l'une des revendications 1 à 6,
caractérisé par
son utilisation dans le cas d'un lève-glace.
